# EUROPÄISCHE PATENTSCHRIFT

(11) **EP 2 749 388 B1**
(45) Veröffentlichungstag und Bekanntmachung des Hinweises auf die Patenterteilung: **22.06.2016**
(21) Anmeldenummer: 12199618.5
(22) Anmeldetag: 28.12.2012
(51) Int. Cl.: B29C 41/18, B29C 41/46, B29C 37/00, B29C 35/16

(54) **Verfahren und Vorrichtung zur Herstellung von Kunststoffteilen aus einem pulverförmigen Kunststoffmaterial**
Method and device for producing plastic parts from a plastic material in powder form
Procédé et dispositif de fabrication de pièces en plastique à partir de matière plastique poudreuse

(43) Veröffentlichungstag der Anmeldung: 02.07.2014
(73) Patentinhaber: SMP Deutschland GmbH, 79268 Bötzingen (DE)
(72) Erfinder: Paulus, Jakob, 93333 Schwaig (DE); Stitzl, Lothar, 85049 Ingolstadt (DE); Maier, Stefan, 93333 Schwaig (DE)
(74) Vertreter: Westphal, Mussgnug & Partner Patentanwälte mbB

(56) Entgegenhaltungen:
- EP-A1- 0 687 545
- WO-A1-2010/026904
- DE-A1-102004 062 589
- JP-A- S6 262 717
- US-A- 4 790 510

## Beschreibung

Die Erfindung betrifft ein Verfahren und eine Vorrichtung zur Herstellung von Kunststoffteilen, aus einem pulverförmigen Kunststoffmaterial mit den oberbegrifflichen Merkmalen des Patentanspruchs 1 oder 2, wie teilweise beispielsweise in DE 10 2004 062 589 A1 als Stand der Technik genannt. Mit gattungsgemäßen Verfahren herstellbare Produkte werden auch Slushhaut genannt.

Aus der DE 10 2004 062 589 A1 ist ein Verfahren zur Herstellung von Häuten oder Folien aus Kunststoff bekannt, bei welchem ein Werkzeug, ein sogenanntes Galvano, auf etwa Schmelztemperatur des Kunststoffs erwärmt und danach mit einem Kunststoffpulver beaufschlagt wird. Auf dem Werkzeug schmilzt eine Pulverschicht und geliert. Nach einem Abkühlvorgang kann eine flexible Haut als Formkörper von dem Werkzeug abgehoben werden.

Eine in der DE 10 2004 062 589 A1 genannte Verfahrensvariante sieht vor, dass das Werkzeug mit dem angelierten Kunststoff nach unten geschwenkt wird und der angelierte Kunststoff auf der dem Werkzeug abgewandten Seite mit einem Kühlmittel beaufschlagt wird.

Die WO2010/026904 A1 beschreibt eine Vorrichtung und ein Verfahren zum Trocknen einer Kunststoffhaut. Die JP S62 62717 A offenbart ein Kühlverfahren zur Kühlung von Kunststoffhäuten. Weiteren Stand der Technik offenbaren die Druckschriften US 4 790 510 A und EP 687 545 A1.

Der Erfindung liegt das Problem zugrunde, das die Produktqualität weiter verbessert werden und / oder das Verfahren wirtschaftlicher ablaufen soll.

Das Problem wird erfindungsgemäß gelöst durch ein Verfahren umfassend die Merkmale des kennzeichnenden Teils des Anspruchs 2, sowie durch eine Vorrichtung nach Anspruch 1.

Vorteilhafte Ausführungsformen sind in den jeweiligen Unteransprüchen angebeben.

Ein erstes erfindungsgemäßes Verfahren zur Herstellung von Kunststoffteilen aus einem pulverförmigen Kunststoffmaterial umfasst zumindest die aufeinander folgenden Verfahrensschritte:
- Erwärmen eines Formwerkzeugs mit einer ersten und einer dieser entgegengesetzten zweiten Formwerkzeugseite,
- Aufbringen einer vorbestimmten Menge des pulverförmigen Kunststoffmaterials auf die zweite Formwerkzeugseite,
- Aufschmelzen des auf der zweiten Formwerkzeugseite aufliegenden pulverförmigen Kunststoffmaterials,
- Beaufschlagen des Kunststoffteils bzw. der Kunststoffteile auf der dem Formwerkzeug abgewandten Seite des Kunststoffteils mit einem Kühlmittel,
- Entformen des aus dem aufgeschmolzenen und gekühlten Kunststoffmaterial gebildeten Kunststoffteils, wobei nach dem Entformen das Kunststoffteil bzw. die Kunststoffteile getrocknet wird/werden.

Auf den nach dem bekannten Verfahren hergestellten Kunststoffteilen verbleibendes Restkühlmittel wird entfernt. Weiterverarbeitungsschritte können schneller folgen. Die Produktqualität ist verbessert, weil Kühlmitteleinschlüsse eher vermieden werden, die leicht vorkommen können, wenn nicht - wie erfindungsgemäß - eine erzwungene Konvektion stattfindet und/oder das Restkühlmittel abgeblasen wird.

Gemäß einer vorteilhaften Ausführungsform des erfindungsgemäßen Verfahrens nach der ersten Verfahrensvariante ist das Kühlmittel vollentsalztes Wasser.

So werden spätere Einschlüsse von im Kühlmittel oder im Trocknungsmittel vorhandenen Stoffen vermieden.

Gemäß einer weiteren vorteilhaften Ausführungsform des erfindungsgemäßen Verfahrens wird / werden zum Trocknen das Kunststoffteil bzw. die Kunststoffteile in bzw. auf eine Trocknungseinrichtung verbracht.

Gemäß einer weiteren vorteilhaften Ausführungsform des erfindungsgemäßen Verfahrens passiert zum Trocknen zumindest eine vorzugsweise mit Druckluft beaufschlagte Düse zumindest eine Oberfläche des Kunststoffteils bzw. der Kunststoffteile, welche mit dem Kühlmittel beaufschlagt worden ist.

Gemäß einer weiteren vorteilhaften Ausführungsform des erfindungsgemäßen Verfahrens passiert die zumindest eine Düse das Kunststoffteil bzw. die Kunststoffteile mehrfach, insbesondere dreimal.

Ein zweites Verfahren zur Herstellung von Kunststoffteilen aus einem pulverförmigen Kunststoffmaterial, umfasst zumindest die aufeinander folgenden Verfahrensschritte:
- Erwärmen eines Formwerkzeugs mit einer ersten Formwerkzeugseite und einer dieser entgegengesetzten zweiten Formwerkzeugseite,
- Aufbringen einer vorbestimmten Menge des pulverförmigen Kunststoffmaterials auf die zweite Formwerkzeugseite,
- Aufschmelzen des auf der zweiten Formwerkzeugseite aufliegenden pulverförmigen Kunststoffmaterials,
- Beaufschlagen des Kunststoffteils bzw. der Kunststoffteile auf der dem Formwerkzeug abgewandten Seite des Kunststoffteils mit einem Kühlmittel,
- Entformen des aus dem aufgeschmolzenen und gekühlten Kunststoffmaterial gebildeten Kunststoffteils,
wobei
das Kühlmittel mittels an einem Drehrahmen angeordneten Hochdruckdüsen nach deren automatischen Zuführung in eine Galvanoschale auf das Kunststoffteil bzw. die Kunststoffteile gesprüht wird.

Es ergibt sich eine Verkürzung der Verfahrensdauer. Ein erfindungsgemäß, insbesondere zur Unterstützung der Thermalkühlung des Galvanos, besonders bevorzugt mittels Hochdruckdüsen, auf das Kunststoffteil aufsprühbarer Nebel sorgt für eine besonders gleichmäßige Kühlung.

Eine bevorzugte Ausführungsform sieht vor, dass ein Aufnahmegestell für die Hochdruckdüsen direkt an dem Drehrahmen befestigt wird, der die Galvanoschale aufweist. Zur Kühlung werden die Düsen automatisch in die Galvanoschale eingefahren.

Der Drehrahmen kann somit während der Abkühlphase weiterhin sämtliche Bewegungen ohne Beeinträchtigungen durchführen, insbesondere Drehen und / oder Rütteln.

Besonders vorteilhaft ist eine Kombination der beiden erfindungsgemäßen Verfahrensvarianten.

Die erfindungsgemäße Vorrichtung hat eine Trocknungseinrichtung für das Trocknen, mit einem Gestell, welches eine Auflage trägt, die zum Aufnehmen des Kunststoffteils bzw. der Kunststoffteile bestimmt ist, und mit entlang des Kunststoffteils verfahrbaren Düsen, welche mit einem Trocknungsmittel beaufschlagbar sind.

Nachfolgend wird die Erfindung anhand von zwei in Zeichnungen dargestellten Vorrichtungen, mittels denen erfindungsgemäße Verfahren durchführbar sind.

Gleiche Teile haben gleiche Bezugszeichen erhalten.

Es zeigen
- Fig. 1: eine schematisierte Darstellung einer Trocknungseinrichtung ohne aufgelegtes Kunststoffteil,
- Fig. 2: eine weitere schematisierte Darstellung der Trocknungseinrichtung aus Figur 1 mit aufgelegtem Kunststoffteil und
- Fig. 3: eine schematisierte Darstellung einer Vorrichtung für ein Beaufschlagen des Kunststoffteils auf der einem Formwerkzeug und einer Galvanoschale abgewandten Seite des Kunststoffteils mit einem Kühlmittel.

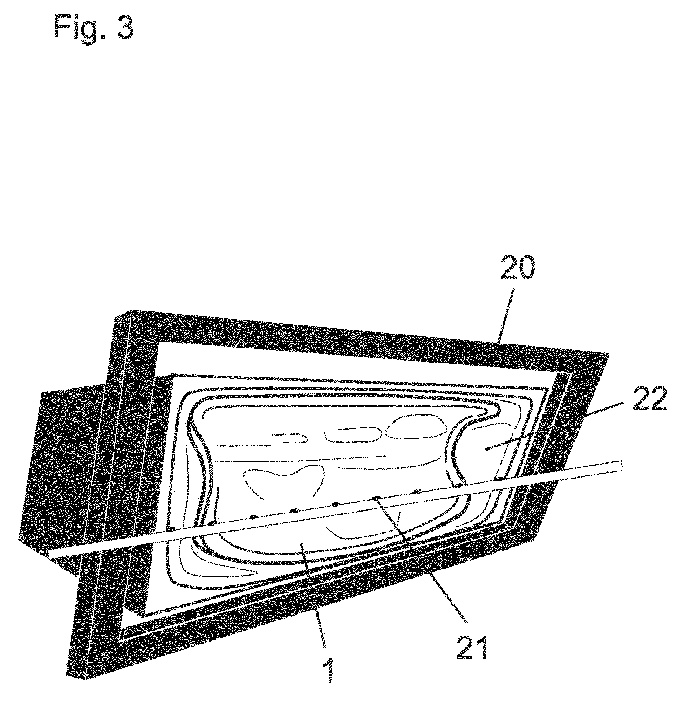

Ein erfindungsgemäßes Verfahren weist grundsätzlich zumindest die folgenden Verfahrensschritte auf, wobei die Verfahrensschritte teilweise anhand Figur 3 nachvollziehbar sind:
- Erwärmen eines in einem Drehrahmen 20 aufgenommenen Formwerkzeugs oder auch Galvanoschale 22 genannt mit einer ersten und einer dieser entgegengesetzten zweiten Formwerkzeugseite,
- Aufbringen (Figur 3 zeigt bereits ein Verfahrensergebnis.) einer vorbestimmten Menge des pulverförmigen Kunststoffmaterials auf die zweite Formwerkzeugseite,
- Aufschmelzen des auf der zweiten Formwerkzeugseite aufliegenden pulverförmigen Kunststoffmaterials,
- Beaufschlagen des entstandenen Kunststoffteils 1 bzw. der Kunststoffteile auf der der Galvanoschale 22 abgewandten Seite des Kunststoffteils 1 mit einem Kühlmittel mittels Hochdruckdüsen 21 und
- Entformen des aus dem aufgeschmolzenen und gekühlten Kunststoffmaterial gebildeten Kunststoffteils 1.

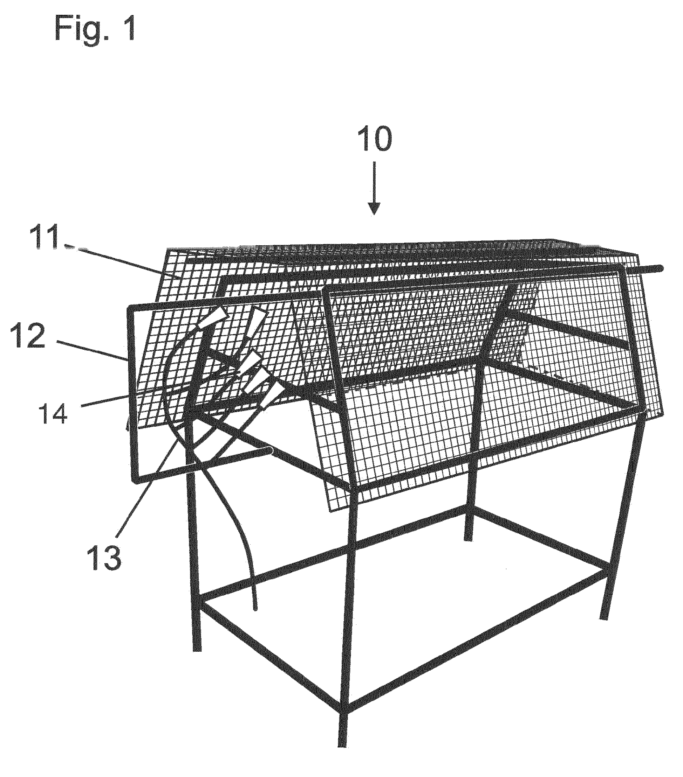

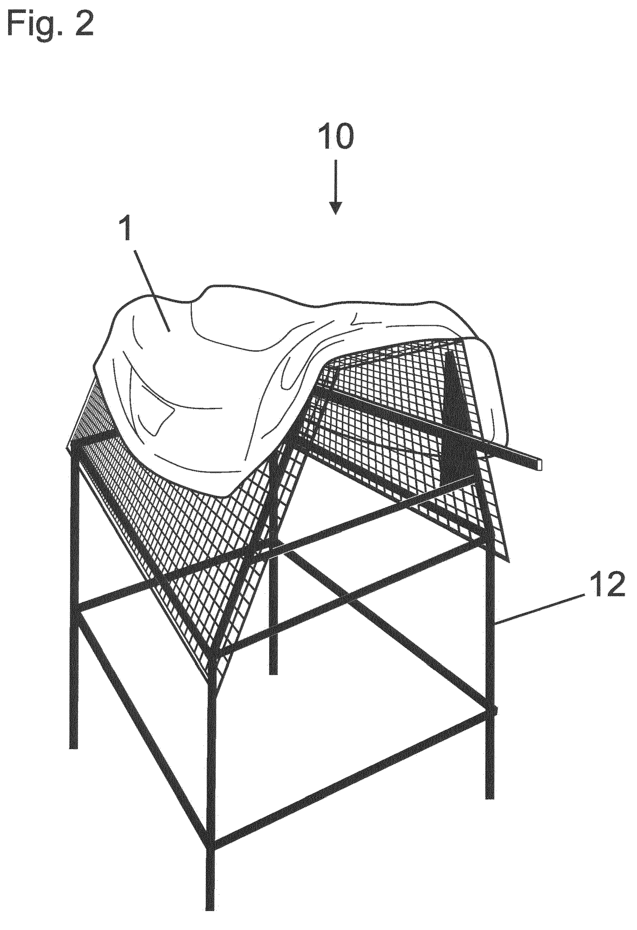

In den Figuren 1 und 2 ist ein nachfolgender Trocknungsschritt mittels einer Trocknungseinrichtung 10 nachvollziehbar. Die Trocknungseinrichtung 10 besteht aus einem Gestell 12, das eine Auflage 11 trägt, bevorzugt ein Gitter aus Metall. Unterhalb des Gitters sind Düsen 14 verfahrbar, die an eine Luftzuführung 13 angeschlossen sind.

### Bezugszeichenliste

- 1: Kunststoffteil

- 10: Trocknungseinrichtung
- 11: Auflage
- 12: Gestell
- 13: Luftzuführung
- 14: Düse

- 20: Drehrahmen
- 21: Hochdruckdüse
- 22: Galvanoschale

## Patentansprüche

1. Vorrichtung zur Durchführung eines Verfahrens zur Herstellung von Kunststoffteilen (1) aus einem pulverförmigen Kunststoffmaterial, umfassend zumindest die aufeinander folgenden Verfahrensschritte:
- Erwärmen eines Formwerkzeugs mit einer ersten und einer dieser gegenüberliegenden zweiten Formwerkzeugseite,
- Aufbringen einer vorbestimmten Menge des pulverförmigen Kunststoffmaterials auf die zweite Formwerkzeugseite,
- Aufschmelzen des auf der zweiten Formwerkzeugseite aufliegenden pulverförmigen Kunststoffmaterials,
- Beaufschlagen des Kunststoffteils (1) bzw. der Kunststoffteile auf der dem Formwerkzeug abgewandten Seite des Kunststoffteils mit einem Kühlmittel,
- Entformen des aus dem aufgeschmolzenen und gekühlten Kunststoffmaterial gebildeten Kunststoffteils (1),
- Trocknen des Kunststoffteils (1) bzw. der Kunststoffteile; **gekennzeichnet durch** eine Trocknungseinrichtung (10) für das Trocknen des Kunststoffteils (1) bzw. der Kunststoffteile
- mit einem Gestell (12), welches eine Auflage (11) trägt, die zum Aufnehmen des Kunststoffteils (10) bzw. der Kunststoffteile bestimmt ist, und
- mit entlang des Kunststoffteils verfahrbaren Düsen (14), welche mit einem Trocknungsmittel beaufschlagbar sind.

2. Verfahren zur Herstellung von Kunststoffteilen (1) aus einem pulverförmigen Kunststoffmaterial, umfassend zumindest die aufeinander folgenden Verfahrensschritte:
- Erwärmen eines Formwerkzeugs mit einer ersten und einer dieser gegenüberliegenden zweiten Formwerkzeugseite,
- Aufbringen einer vorbestimmten Menge des pulverförmigen Kunststoffmaterials auf die zweite Formwerkzeugseite,
- Aufschmelzen des auf der zweiten Formwerkzeugseite aufliegenden pulverförmigen Kunststoffmaterials,
- Beaufschlagen des Kunststoffteils (1) bzw. der Kunststoffteile auf der dem Formwerkzeug abgewandten Seite des Kunststoffteils mit einem Kühlmittel,
- Entformen des aus dem aufgeschmolzenen und gekühlten Kunststoffmaterial gebildeten Kunststoffteils (1), **dadurch gekennzeichnet, dass** nach dem Entformen das Kunststoffteil (1) bzw. die Kunststoffteile getrocknet wird/werden, unter Verwendung einer Trocknungseinrichtung,
- mit einem Gestell (12), welches eine Auflage (11) trägt, die zum Aufnehmen des Kunststoffteils (10) bzw. der Kunststoffteile bestimmt ist, und
- mit entlang des Kunststoffteils (10) bzw. der Kunststoffteile verfahrbaren Düsen (14), welche mit einem Trocknungsmittel beaufschlagbar sind.

3. Verfahren nach Anspruch 2,
**dadurch gekennzeichnet, dass** das Kühlmittel vollentsalztes Wasser ist.

4. Verfahren nach einem der Ansprüche 2 oder 3,
**dadurch gekennzeichnet, dass**
zum Trocknen das Kunststoffteil (1) bzw. die Kunststoffteile in bzw. auf eine Trocknungseinrichtung (10) verbracht wird/werden.

5. Verfahren nach einem der Ansprüche 2 bis 4,
**dadurch gekennzeichnet, dass**
zum Trocknen zumindest eine vorzugsweise mit Druckluft beaufschlagte Düse (14) die Oberfläche auf der dem Formwerkzeug abgewandten Seite des Kunststoffteils (1) bzw.
der Kunststoffteile passiert, nachdem sie mit dem Kühlmittel beaufschlagt worden ist.

6. Verfahren nach Anspruch 5,
**dadurch gekennzeichnet, dass**
die zumindest eine Düse (14) das Kunststoffteil (1) bzw. die Kunststoffteile mehrfach passiert, insbesondere dreimal.

## Claims

1. Device for carrying out a method for the production of plastic parts (1) made from a pulverulent plastic material, comprising at least the successive method steps:
- heating a moulding tool having a first moulding tool side and a second moulding tool side located opposite this,
- applying a predetermined quantity of the pulverulent plastic material to the second moulding tool side,
- fusing the pulverulent plastic material located on the second moulding tool side,
- loading the plastic part (1) or the plastic parts with a cooling agent on the side of the plastic part facing away from the moulding tool,
- demoulding the plastic part (1) formed from the fused and cooled plastic material,
- drying the plastic part (1) or the plastic parts;
**characterised by**
a drying apparatus (10) for drying the plastic part (1) or the plastic parts,
- having a frame (12) which bears a support (11) that is intended for receiving the plastic part (10) or the plastic parts, and
- having nozzles (14) that are able to move along the plastic part, said nozzles being able to be loaded with a drying agent.

2. Method for the production of plastic parts (1) made from a pulverulent plastic material, comprising at least the successive method steps:
- heating a moulding tool having a first moulding tool side and a second moulding tool side located opposite this,
- applying a predetermined quantity of the pulverulent plastic material to the second moulding tool side,
- fusing the pulverulent plastic material located on the second moulding tool side,
- loading the plastic part (1) or the plastic parts with a cooling agent on the side of the plastic part facing away from the moulding tool,
- demoulding the plastic part (1) formed from the fused and cooled plastic material,
**characterised in that**
after the demoulding, the plastic part (1) or the plastic parts is/are dried by using a drying apparatus,
- having a frame (12) which bears a support (11) that is intended for receiving the plastic part (10) or the plastic parts, and
- having nozzles (14) that are able to move along the plastic part (10) or the plastic parts, said nozzles being able to be loaded with a drying agent.

3. Method according to claim 2,
**characterised in that**
the cooling agent is demineralised water.

4. Method according to one of claims 2 or 3,
**characterised in that**
for drying, the plastic part (1) or the plastic parts is/are brought into or onto a drying apparatus (10).

5. Method according to one of claims 2 to 4,
**characterised in that**
for drying, at least one nozzle (14), which is preferably loaded with pressurised air, passes the surface on the side of the plastic part (1) or plastic parts facing away from the moulding tool, after it has been loaded with the cooling agent.

6. Method according to claim 5,
**characterised in that**
the at least one nozzle (14) passes the plastic part (1) or the plastic parts several times, in particular three times.

## Revendications

1. Dispositif permettant la mise en oeuvre d'un procédé de fabrication de pièces en matériau synthétique (1) à partir d'un matériau synthétique pulvérulent comprenant au moins les étapes successives suivantes consistant à :
- chauffer un outil de mise en forme ayant une première face d'outil de mise en forme et une seconde face d'outil de mise en forme opposée à celle-ci,
- appliquer une quantité prédéfinie du matériau synthétique pulvérulent sur la seconde face de l'outil de mise en forme,
- faire fondre le matériau synthétique pulvérulent appliqué sur la seconde face de l'outil de mise en forme,
- soumettre la pièce en matériau synthétique (1) ou les pièces en matériau synthétique à l'action d'un fluide de refroidissement sur sa(leur) face(s) située(s) à l'opposé de l'outil de mise en forme,
- démouler la pièce en matériau synthétique (1) réalisée à partir du matériau synthétique fondu et refroidi,
- sécher la pièce en matériau synthétique (1) ou les pièces en matériau synthétique,
**caractérisé par**
un dispositif de séchage (10) pour permettre de sécher la pièce en matériau synthétique (1) ou les pièces en matériau synthétique, comprenant :
- un châssis (12) portant un support (11) susceptible de recevoir la pièce en matériau synthétique (10) ou les pièces en matériau synthétique, et
- des buses (14) pouvant être déplacées le long de la pièce en matériau synthétique et pouvant être alimentées en un agent de séchage.

2. Procédé de fabrication de pièces en matériau synthétique (1) en un matériau synthétique pulvérulent comprenant au moins les étapes de procédé successives consistant à :
- chauffer un outil de mise en forme ayant une première face d'outil de mise en forme et une seconde face d'outil de mise en forme opposée à celle-ci,
- appliquer une quantité prédéfinie du matériau synthétique pulvérulent sur la seconde face de l'outil de mise en forme,
- faire fondre le matériau synthétique pulvérulent appliqué sur la seconde face de l'outil de mise en forme,
- soumettre la pièce en matériau synthétique (1) ou les pièces en matériau synthétique à l'action d'un fluide de refroidissement sur sa(leur) face(s) située(s) à l'opposé de l'outil de mise en forme,
- démouler la pièce en matériau synthétique (1) réalisée à partir du matériau synthétique fondu et refroidi,
**caractérisé en ce que**
après le démoulage, la pièce en matériau synthétique (1) ou les pièces en matériau synthétique est(sont) séchée(s) en utilisant un dispositif de séchage comprenant :
- un châssis (12) portant un support (11) destiné à recevoir la pièce en matériau synthétique (10) ou les pièces en matériau synthétique, et
- des buses (14) mobiles le long de la pièce en matériau synthétique (10) ou des pièces en matériau synthétique et pouvant être alimentées en un agent de séchage.

3. Procédé conforme à la revendication 2,
**caractérisé en ce que**
le fluide de refroidissement est de l'eau totalement déminéralisée.

4. Procédé conforme à l'une des revendications 2 et 3,
**caractérisé en ce que**
pour effectuer le séchage, la pièce en matériau synthétique (1) ou les pièces en matériau synthétique est(sont) transférée(s) dans ou sur un dispositif de séchage (10).

5. Procédé conforme à l'une des revendications 2 à 4,
**caractérisé en ce que**
pour effectuer le séchage, au moins une buse (14) de préférence alimentée en air comprimé balaye la surface de la face de la pièce en matériau synthétique (1) ou des pièces en matériau synthétique située(s) à l'opposé de l'outil de mis en forme après qu'elle ait été alimentée en fluide de refroidissement.

6. Procédé conforme à la revendication 5,
**caractérisé en ce que**
la buse (14) balaye plusieurs fois en particulier trois fois la pièce en matériau synthétique (1) ou les pièces en matériau synthétique.
